# EUROPEAN PATENT SPECIFICATION

(11) **EP 4 014 576 B1**
(45) Date of publication and mention of the grant of the patent: **12.11.2025**
(21) Application number: 20855594.6
(22) Date of filing: 14.08.2020
(51) Int. Cl.: H04W 48/16, H04W 48/08, H04W 60/00, H04W 12/10, H04W 12/00

(54) **APPARATUS AND METHOD FOR ACCESS CONTROL, MANAGEMENT, AND PROTECTION IN WIRELESS COMMUNICATION SYSTEM**
VORRICHTUNG UND VERFAHREN FÜR ZUGANGSSTEUERUNG, VERWALTUNG UND SCHUTZ IN EINEM DRAHTLOSEN KOMMUNIKATIONSSYSTEM
APPAREIL ET PROCÉDÉ DE COMMANDE, DE GESTION ET DE PROTECTION D'ACCÈS DANS UN SYSTÈME DE COMMUNICATION SANS FIL

(30) Priority: 16.08.2019 KR 20190100566
(43) Date of publication of application: 22.06.2022
(73) Proprietor: Samsung Electronics Co., Ltd., Suwon-si, Gyeonggi-do 16677 (KR)
(72) Inventor: SUH, Kyungjoo, Suwon-si, Gyeonggi-do 16677 (KR); KWEON, Kisuk, Suwon-si, Gyeonggi-do 16677 (KR)
(74) Representative: Gulde & Partner
(86) International application number: PCT/KR2020/010849
(87) International publication number: WO 2021/034031

(56) References cited:
- MEDIATEK INC: "Storage for CAG information", vol. CT WG1, no. Reno (NV), USA; 20190513 - 20190517, 13 May 2019 (2019-05-13), XP051726507, Retrieved from the Internet <URL:http://www.3gpp.org/ftp/Meetings%5F3GPP%5FSYNC/CT1/Docs/C1%2D193382%2Ezip> [retrieved on 20190513]
- NOKIA ET AL: "5GMM cause value for CAG", vol. CT WG1, no. Xi'an, P.R. of China; 20190408 - 20190412, 12 April 2019 (2019-04-12), XP051698806, Retrieved from the Internet <URL:http://www.3gpp.org/ftp/Meetings%5F3GPP%5FSYNC/CT1/updates/update15/C1%2D192813%2Ezip> [retrieved on 20190412]
- QUALCOMM INCORPORATED: "Handling of Allowed CAG list during registration", 3GPP DRAFT; S2-1907042_23502_ALLOWED CAG LIST_REGISTRATION ACCEPT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sapporo, Japan; 20190623 - 20190628, 18 June 2019 (2019-06-18), Mobile Competence Centre ; 650, route des Lucioles ; F-06921 Sophia-Antipolis Cedex ; France, XP051752016
- "3rd Generation Partnership Project; Technical Specification Group Services and System Aspects; Procedures for the 5G System; Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.1.1, 11 June 2019 (2019-06-11), Mobile Competence Centre ; 650, route des Lucioles ; F-06921 Sophia-Antipolis Cedex ; France, pages 1 - 495, XP051753974
- NOKIA, NOKIA SHANGHAI BELL: "Provisioning of an allowed CAG list and a CAG access only indication", 3GPP DRAFT; C1-192333_CAG_INFORMATION_UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Xi'an, P.R. of China; 20190408 - 20190412, 2 April 2019 (2019-04-02), Mobile Competence Centre ; 650, route des Lucioles ; F-06921 Sophia-Antipolis Cedex ; France, XP051705521
- OPPO: "Introducing support for Non-Public Networks and operations on Allowed CAG list", 3GPP DRAFT; S2-1901613-CR-23501-ADDITIONS-TO-S2-1901391-ON-CAG-LIST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Tenerife (Spain); 20190225 - 20190301, 18 February 2019 (2019-02-18), Mobile Competence Centre ; 650, route des Lucioles ; F-06921 Sophia-Antipolis Cedex ; France, XP051610217
- MEDIATEK INC.: "NPN: Update and enforcement of new Allowed CAG list and CAG-only indication", 3GPP DRAFT; S2-1906552_WAS_S2-1905212_UPDATE AND ENFORCEMENT OF NEW ALLOWED CAG LIST AND CAG-ONLY INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, NV, USA; 20190513 - 20190517, 16 May 2019 (2019-05-16), Mobile Competence Centre ; 650, route des Lucioles ; F-06921 Sophia-Antipolis Cedex ; France, XP051736361

## Description

### Technical Field

The disclosure relates to a method and apparatus for access control, management, and protection to support various services in a wireless communication system.

### Background Art

In order to meet increasing demand with respect wireless data traffic after the commercialization of 4^{th} generation (4G) communication systems, efforts have been made to develop 5^{th} generation (5G) or pre-5G communication systems. For this reason, 5G or pre-5G communication systems are called 'beyond 4G network' communication systems or 'post long term evolution (post-LTE)' systems. The 5G communication system defined by the 3^{rd} Generation Partnership Project (3GPP) is called a New Radio (NR) system. To achieve high data rates, implementation of 5G communication systems in an ultra-high frequency millimeter-wave (mmWave) band (e.g., a 60-gigahertz (GHz) band) is being considered. In order to reduce path loss of radio waves and increase a transmission distance of radio waves in the ultra-high frequency band for 5G communication systems, various technologies such as beamforming, massive multiple-input and multiple-output (massive MIMO), full-dimension MIMO (FD-MIMO), array antennas, analog beamforming, and large-scale antennas are being studied and applied to the NR system. In order to improve system networks for 5G communication systems, various technologies such as evolved small cells, advanced small cells, cloud radio access networks (Cloud-RAN), ultra-dense networks, device-to-device communication (D2D), wireless backhaul, moving networks, cooperative communication, coordinated multi-points (CoMP), and interference cancellation have been developed. In addition, for 5G communication systems, advanced coding modulation (ACM) technologies such as hybrid frequency-shift keying (FSK) and quadrature amplitude modulation (QAM) (FQAM) and sliding window superposition coding (SWSC), and advanced access technologies such as filter bank multi-carrier (FBMC), non-orthogonal multiple access (NOMA), and sparse code multiple access (SCMA), have been developed.

The Internet has evolved from a human-based connection network, where humans create and consume information, to the Internet of things (IoT), where distributed elements such as objects exchange information with each other to process the information. Internet of everything (IoE) technology has emerged, in which the IoT technology is combined with, for example, technology for processing big data through connection with a cloud server. In order to implement the IoT, various technological elements such as sensing technology, wired/wireless communication and network infrastructures, service interface technology, and security technology are required, such that, in recent years, technologies related to sensor networks for connecting objects, machine-to-machine (M2M) communication, and machine-type communication (MTC) have been studied. In the IoT environment, intelligent Internet technology (IT) services may be provided to collect and analyze data obtained from connected objects to create new value in human life. As existing information technology (IT) and various industries converge and combine with each other, the IoT may be applied to various fields such as smart homes, smart buildings, smart cities, smart cars or connected cars, smart grids, health care, smart home appliances, and advanced medical services.

Various attempts are being made to apply 5G communication systems to the IoT network. For example, 5G communication technologies related to sensor networks, M2M communication, and MTC are being implemented by using technologies including beamforming, MIMO, and array antennas. Application of cloud radio access network (Cloud-RAN) as the above-described big data processing technology may be an example of convergence of 5G communication technology and IoT technology.

Non-Patent Literature 1: Mediatek Inc.: "Storage for CAG information", 3GPP Draft; 3rd Generation Partnership Project (3GPP), Mobile Competence Centre; 650, Route des Lucioles; F-06921 Sophia-Antipolis Cedex; France, vol. CT WG1, no. Reno (NV), USA; May 13, 2019, XP051726507Non-Patent Literature 2: Nokia et al.: "5GMM cause value for CAG", 3GPP Draft; 3rd Generation Partnership Project (3GPP), Mobile Competence Centre; 650, Route des Lucioles; F-06921 Sophia-Antipolis Cedex; France, vol. CT WG1, no. Xi'an, P.R. of China; April 12, 2019, XP051698806

Patent Literature 1 and 2 disclose aspects of communication of a user equipment in a wireless network.

The disclosure relates to a method and apparatus for access control, management, and protection to support various services in a wireless communication system.

### Disclosure of Invention

### Solution to Problem

The invention is defined by the independent claims. Embodiments are defined by the dependent claims.

### Advantageous Effects of Invention

According to an embodiment of the disclosure, a method and apparatus for access control, management, and protection to support various services in a wireless communication system

### Brief Description of Drawings

The above and other aspects, features, and advantages of certain embodiments of the disclosure will be more apparent from the following description taken in conjunction with the accompanying drawings, in which:
FIG. 1 illustrates a user equipment (UE) and a network environment in a private network and a public network of a 5th generation (5G) or new radio (NR) network, according to an embodiment of the disclosure;
FIG. 2 illustrates a diagram for describing a procedure for secure communication in a private network and a public network of a 5G or NR network, according to a claimed embodiment of the disclosure;
FIG. 3 illustrates a diagram for describing a procedure for secure communication in a private network and a public network of a 5G or NR network, according to another embodiment of the disclosure;
FIG. 4 illustrates a diagram illustrating a configuration of a UE, according to an embodiment of the disclosure; and
FIG. 5 illustrates a diagram illustrating a configuration of a network entity, according to an embodiment of the disclosure.

### Best Mode for Carrying out the Invention

According to an embodiment of the disclosure, a method and apparatus for access control, management, and protection to support various services in a wireless communication system may be provided.

Additional aspects will be set forth in part in the description which follows and, in part, will be apparent from the description, or may be learned by practice of the presented embodiments of the disclosure.

According to an embodiment of the disclosure, an access method of a user equipment (UE) in a wireless communication system includes: transmitting, to an Access and Mobility Management Function (AMF), a Registration Request message; receiving, from the AMF, a Registration Accept message including Closed Access Group (CAG) information in response to the Registration Request message; storing or updating the CAG information; and accessing a network based on the CAG information.

According to an embodiment of the disclosure, a method of an Access and Mobility Management Function (AMF) in a wireless communication system includes: receiving, from a user equipment (UE), a Registration Request message; transmitting, to a user Data Management (UDM), a request message for subscription information related to the UE; receiving, from the UDM, a response message including the subscription information related to the UE; generating a Closed Access Group (CAG) information based on the subscription information; and transmitting, to the UE, a Registration Accept message including the CAG information in response to the Registration Request message.

According to an embodiment of the disclosure, a user equipment (UE) in a wireless communication system includes: a transceiver; a memory; and a processor configured to: transmit, to an Access and Mobility Management Function (AMF), a Registration Request message; receive, from the AMF, a Registration Accept message including Closed Access Group (CAG) information in response to the Registration Request message; store or update the CAG information; and access a network based on the CAG information.

According to an embodiment of the disclosure, an Access and Mobility Management Function (AMF) in a wireless communication system includes: a transceiver; a memory; and a processor configured to: receive, from a user equipment (UE), a Registration Request message; transmit, to a user Data Management (UDM), a request message for subscription information related to the UE; receive, from the UDM, a response message including the subscription information related to the UE; generate a Closed Access Group (CAG) information based on the subscription information; and transmit, to the UE, a Registration Accept message including the CAG information in response to the Registration Request message.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### Mode for Invention

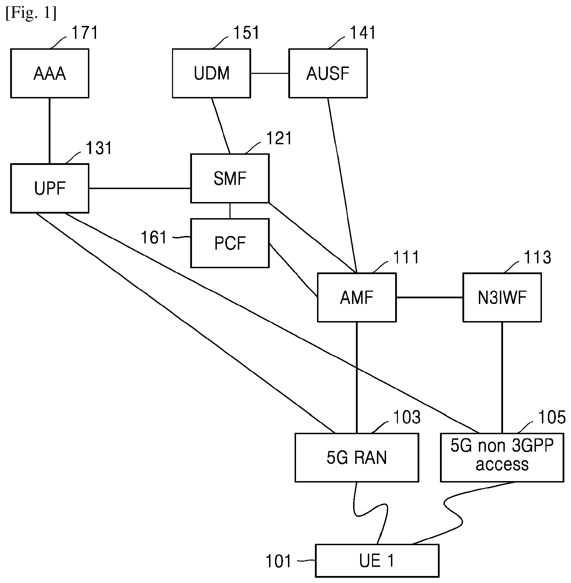

FIGS. 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, embodiments of the disclosure will be described in detail with reference to accompanying drawings. In the following descriptions of embodiments of the disclosure, descriptions of techniques that are well known in the art and not directly related to the disclosure are omitted. This is to clearly convey the gist of the disclosure by omitting an unnecessary explanation.

For the same reason, some elements in the drawings are exaggerated, omitted, or schematically illustrated. Also, the size of each element does not entirely reflect the actual size. In the drawings, the same or corresponding elements are denoted by the same reference numerals.

Throughout the disclosure, the expression "at least one of a, b or c" indicates only a, only b, only c, both a and b, both a and c, both b and c, all of a, b, and c, or variations thereof.

Examples of a terminal may include a user equipment (UE), a mobile station (MS), a cellular phone, a smartphone, a computer, a multimedia system capable of performing a communication function, or the like.

In the disclosure, a controller may also be referred to as a processor.

Throughout the specification, a layer (or a layer apparatus) may also be referred to as an entity.

The advantages and features of the disclosure and methods of achieving them will become apparent with reference to embodiments of the disclosure described in detail below with reference to the accompanying drawings. The disclosure may, however, be embodied in many different forms and should not be construed as limited to embodiments set forth herein; rather these embodiments are provided so that this disclosure will be thorough and complete, and will fully convey the scope of the disclosure only defined by the claims to one of ordinary skill in the art. Throughout the specification, the same elements are denoted by the same reference numerals.

It will be understood that each block of flowchart illustrations, and combinations of blocks in the flowchart illustrations, may be implemented by computer program instructions. The computer program instructions may be provided to a processor of a general-purpose computer, special purpose computer, or other programmable data processing apparatus, such that the instructions, which are executed via the processor of the computer or other programmable data processing apparatus, generate means for performing functions specified in the flowchart block or blocks. The computer program instructions may also be stored in a computer usable or computer-readable memory that may direct the computer or other programmable data processing apparatus to function in a particular manner, such that the instructions stored in the computer usable or computer-readable memory produce an article of manufacture including instruction means that perform the functions specified in the flowchart block or blocks. The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block or blocks.

In addition, each block of the flowchart illustrations may represent a module, segment, or portion of code, which includes one or more executable instructions for performing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "~ unit", as used in the present embodiment of the disclosure refers to a software or hardware component, such as field-programmable gate array (FPGA) or application-specific integrated circuit (ASIC), which performs certain tasks. However, the term "unit" does not mean to be limited to software or hardware. A "unit" may be configured to be in an addressable storage medium or configured to operate one or more processors. Thus, a "unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "units" may be combined into fewer components and "units" or may be further separated into additional components and "units". Further, the components and "units" may be implemented to operate one or more central processing units (CPUs) in a device or a secure multimedia card. Also, in embodiments of the disclosure, "unit" may include one or more processors.

Hereinafter, terms identifying an access node, terms indicating network entities, terms indicating messages, terms indicating an interface between network entities, and terms indicating various pieces of identification information, as used in the following description, are exemplified for convenience of descriptions. Accordingly, the disclosure is not limited to terms to be described below, and other terms indicating objects having equal technical meanings may be used.

For convenience of description, the disclosure uses terms and names defined in the 3rd Generation Partnership Project (3GPP) long term evolution (LTE) standards, or terms and names modified based on the defined terms and names. However, the disclosure is not limited to these terms and names, and may be equally applied to communication systems conforming to other standards. In the disclosure, an evolved node B (eNB) may be interchangeably used with a next-generation node B (gNB) for convenience of explanation. That is, a base station (BS) described by an eNB may represent a gNB. In the disclosure, the term "user equipment (UE)" may represent not only a handphone, Narrowband Internet of Things (NB-IoT) devices, and sensors but may also represent various wireless communication devices. Although embodiments of the disclosure are described by using communication systems following the 3GPP standard, it will be understood by one of ordinary skill in the art that the main essence of the disclosure may also be applied to other communication systems having a similar technical background through some modifications without departing from the scope of the disclosure.

The disclosure relates to a method by which a UE performs communication by using a 5th generation (5G) or New Radio (NR) system in an environment where vertical networks exist in a next-generation 5G or NR communication environment. That is, the 5G or NR system may support the Industrial Internet of Things (IIoT) to support a new service through connection and convergence in the industrial world. The IIoT may include a smart factory, a smart city, an autonomous driving service, or the like. Accordingly, there is a demand for a communication scheme for supporting a non-public network (NPN), Ultra Reliability Low Latency Communication (URLLC), or the like.

In the disclosure, a method and apparatus for a secure access to maintain security in a public network or a private network will now be described. In particular, a method and apparatus for managing an access by a UE when the UE attempts to communicate with a public network or a private network, and protecting and managing the UE when the UE accesses the public network or the private network will now be described.

In the 5G or NR system, an Access and Mobility management Function (AMF) that is a management entity for managing mobility of a UE, and a Session Management Function (SMF) that is an entity for managing a session are separate. Accordingly, unlike the 4th generation long term evolution (4G LTE) system where a Mobility Management Entity (MME) performs both mobility management and session management, in the 5G or NR system, an entity for performing mobility management and an entity for performing session management are separate such that a method for communication between a UE and a network entity and a method of managing the communication are changed.

In the 5G or NR system, the AMF performs mobility management on non-3GPP access via a Non-3GPP Inter-Working Function (N3IWF), and the SMF performs session management on the non-3GPP access. Also, the AMF processes security-related information that is an important factor in mobility management.

As described above, in the 4G LTE system, the MME performs both mobility management and session management. The 5G or NR system may support non-standalone architecture in which communication is performed by also using a network entity of the 4G LTE system.

The 5G or NR system may support a vertical network that allows access for various application services. Also, the 5G or NR system may support a network that allows public access for the various application services. Furthermore, the 5G or NR system may support a private (closed) network or may configure a network to support the private (closed) network to allow private access by UEs in a closed group.

In this regard, in the disclosure, a method by which a UE can securely access to a public network or a private network, while security is maintained, by using a vertical network in a next-generation 5G or NR communication system will now be described. In the disclosure, a method of managing an access by a UE when the UE attempts to communicate with a public network or a private network, and protecting and managing the UE when the UE accesses the public network or the private network, or a method of performing functions of the managing and protecting will now be described.

According to an embodiment of the disclosure, in 5G or NR system environment where one or more vertical networks exist, a UE may securely access a public network or a private network when the UE accesses the public network or the private network. Also, communication performance of a network may be enhanced, and communication may be efficiently performed.

FIG. 1 illustrates a UE and a network environment in a private network and a public network of a 5G or NR network, according to an embodiment of the disclosure.

Referring to FIG. 1, a 5G or NR core network may include Network Functions (NFs) such as an AMF 111, a SMF 121, a User Plane Function (UPF) 131, User Data Management (UDM) 151, a Policy Control Function (PCF) 161, and the like. In order to authenticate such entities, the 5G or NR core network may include entities such as an Authentication Server Function (AUSF) 141, authentication, authorization and accounting (AAA) 171, and the like. A UE (also referred to as the terminal) 101 may access a 5G core network via a 5G Radio Access Network (RAN) (also referred to as the BS) 103. Furthermore, for a case where the UE 101 performs communication via non-3GPP access 105, a N3 interworking function (N3IWF) 113 may exist, and when the UE performs communication via the non-3GPP access 105, session management may be controlled via the UE 101, the non-3GPP access 105, the N3IWF 103, and the SMF 121, and mobility management may be controlled via the UE 101, the non-3GPP access 105, the N3IWF 113, and the AMF 111.

In the 5G or NR system, an entity for performing mobility management and session management is divided into the AMF 111 and the SMF 121. For the 5G or NR system, standalone deployment architecture in which only 5G or NR entities perform communication, and non-standalone deployment architecture in which both a 4G entity and a 5G or NR entity are used are considered.

Also, according to various application services, a plurality of vertical networks may be configured or a public network and a private network may be configured. A core network of the 5G or NR system may be shared in the use of the private network and the public network. Furthermore, the 5G RAN that is a gNB may use same physical devices that are logically distinguished therebetween.

A communication network described in the disclosure refers to the 5G or NR system or the 4G LTE system, but the disclosure may also be applied to another communication system with a same technical concept to the extent that one of ordinary skill in the art can understand.

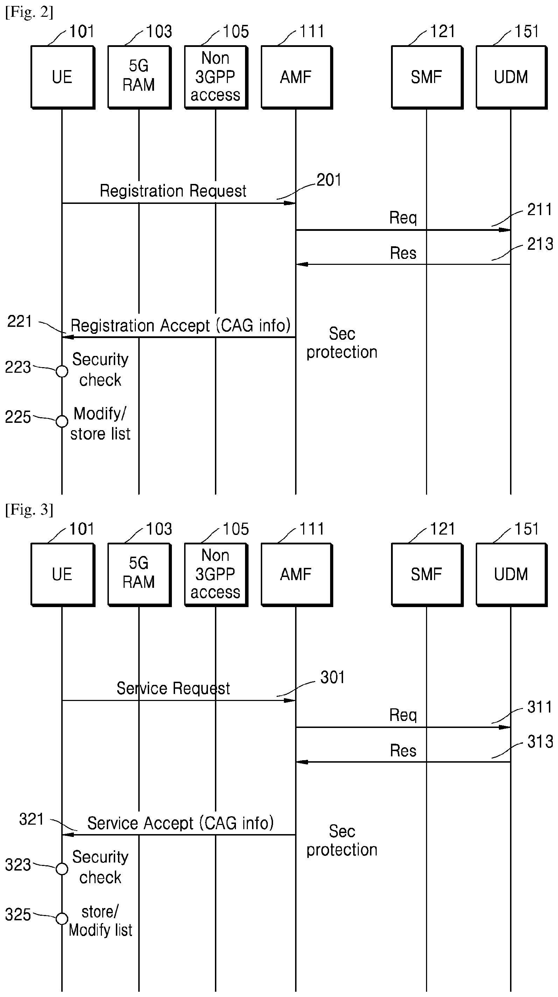

FIG. 2 illustrates a diagram for describing a procedure for secure communication in a private network and a public network of a 5G or NR network, according to an embodiment of the disclosure.

In operation 201, the UE 101 transmits a Registration Request message to the AMF 111. The Registration Request message may include information indicating a Closed Access Group (CAG) only one case so as to solve a problem that may occur when there is only one CAG.

In operation 211, the AMF 111 may request the UDM 151 for subscription information related to the UE 101.

In operation 213, the UDM 151 may transmit the subscription information related to the UE 101 to the AMF 111, in response to the request received in operation 211.

In operation 221, the AMF 111 transmits a Registration Accept message to the UE 101. In this regard, the Registration Accept message includes CAG list information. The CAG list information refers to information including a list of CAGs to which the UE 101 accesses. The Registration Accept message may be secured by using Non Access Stratum (NAS) security context and then may be transmitted. In an embodiment of the disclosure, the Registration Accept message may be configured as shown in [Table 1].

**[Table 1] Registration Accept message**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | Security header type | Security header type | M | V | 1/2 |
| | Spare half octet | Spare half octet | M | V | 1/2 |
| | Registration accept message identity | Message type | M | V | 1 |
| | 5GS registration result | 5GS registration result | M | LV | 2 |
| 77 | 5G-GUTI | 5GS mobile identity | O | TLV-E | 14 |
| 4A | Equivalent PLMNs | PLMN list | O | TLV | 5-47 |
| 54 | TAI list | 5GS tracking area identity list | O | TLV | 9-114 |
| 15 | Allowed NSSAI | NSSAI | O | TLV | 4-74 |
| 11 | Rejected NSSAI | Rejected NSSAI | O | TLV | 4-42 |
| 31 | Configured NSSAI | NSSAI | O | TLV | 4-146 |
| 21 | 5GS network feature support | 5GS network feature support | O | TLV | 3-5 |
| 50 | PDU session status | PDU session status | O | TLV | 4-34 |
| 26 | PDU session reactivation result | PDU session reactivation result | O | TLV | 4-34 |
| 72 | PDU session reactivation result error cause | PDU session reactivation result error cause | O | TLV-E | 5-515 |
| 79 | LADN information | LADN information | O | TLV-E | 12-1715 |
| B- | MICO indication | MICO indication | O | TV | 1 |
| 9- | Network slicing indication | Network slicing indication | O | TV | 1 |
| 27 | Service area list | Service area list | O | TLV | 6-114 |
| 5E | T3512 value | GPRS timer 3 | O | TLV | 3 |
| 5D | Non-3GPP de-registration timer value | GPRS timer 2 9.11.2.4 | O | TLV | 3 |
| 16 | T3502 value | GPRS timer 2 | O | TLV | 3 |
| 34 | Emergency number list | Emergency number list | O | TLV | 5-50 |
| 7A | Extended emergency number list | Extended emergency number list | O | TLV-E | 7-65538 |
| 73 | SOR transparent container | SOR transparent container | O | TLV-E | 20-n |
| 78 | EAP message | EAP message | O | TLV-E | 7-1503 |
| A- | NSSAI inclusion mode | NSSAI inclusion mode | O | TV | 1 |
| 76 | Operator-defined access category definitions | Operator-defined access category definitions | O | TLV-E | 3-n |
| 51 | Negotiated DRX parameters | 5GS DRX parameters | O | TLV | 3 |
| D- | Non-3GPP NW policies | Non-3GPP NW provided policies | O | TV | 1 |
| 60 | EPS bearer context status | EPS bearer context status | O | TLV | 4 |
| xx | Negotiated extended DRX parameters | Extended DRX parameters | O | TLV | 3 |
| tbd | T3447 value | GPRS timer 3 | O | TLV | 3 |
| XX | T3448 value | GPRS timer 3 | O | TLV | 3 |
| TBD | T3324 value | GPRS timer 3 | O | TLV | 3 |
| | CAG Info | CAG Info | O | TLV | |

In an embodiment of the disclosure, CAG information (CAG info) may be represented as an information element (IE) configured as shown in [Table 2]. To be more specific, CAG info may refer to the information including a list of CAGs to which the UE 101 may access, and may include the list of CAGs and information about the list. Accordingly, a CAG info value may include a plurality of pieces of information related to CAG lists, and a length of CAG info contents may include length information about CAG info contents information.

**[Table 2]**

| 8 | 7 | 6 | 5 | 4 | 3 | 2 | 1 | |
|---|---|---|---|---|---|---|---|---|
| CAG info IEI | | | | | | | | octet 1 |
| Length of CAG info contents | | | | | | | | octet 2 |
| CAG info value | | | | | | | | octet 3 |
| | | | | | | | | octet 4 |

In operation 221, the AMF 111 may transmit the Registration Accept message to the UE 101. In an embodiment of the disclosure, the Registration Accept message may be a secured message. In an embodiment of the disclosure, integrity protection may be performed on the Registration Accept message. Alternatively, integrity protection and ciphering may be performed on the Registration Accept message. Alternatively, a security procedure may not be applied to the Registration Accept message.

In operation 223, the UE 101 may perform a security check on the Registration Accept message received from the AMF 111. As described above, the Registration Accept message may be the secured message. In an embodiment of the disclosure, in the security check, the UE 101 may perform verification on integrity protection of the Registration Accept message, and when the verification with respect to the integrity protection is successful, the UE 101 may perform subsequent operations by using a CAG list included in the Registration Accept message. Alternatively, in the security check, the UE 101 may perform deciphering and verification on integrity protection of the Registration Accept message, and when the verification and the deciphering are successful, the UE 101 may perform subsequent operations by using the CAG list included in the Registration Accept message. Alternatively, when the Registration Accept message is not the secured message, the UE 101 may not perform the security procedure and may perform subsequent operations by using the CAG list included in the Registration Accept message.

In operation 225, the UE 101 stores the CAG list obtained in operation 223. In an embodiment of the disclosure, the UE 101 may modify or update a pre-stored CAG list.

FIG. 3 illustrates a diagram for describing a procedure for secure communication in a private network and a public network of a 5G or NR network, according to another embodiment of the disclosure.

In operation 301, the UE 101 transmits a Service Request message to the AMF 111. The Service Request message may include information indicating a CAG only one case so as to solve a problem that may occur when there is only one CAG.

In operation 311, the AMF 111 may request the UDM 151 for subscription information related to the UE 101.

In operation 313, the UDM 151 may transmit the subscription information related to the UE 101 to the AMF 111, in response to the request received in operation 311.

In operation 321, the AMF 111 transmits a Service Accept message to the UE 101. In this regard, the Service Accept message may include CAG list information. The CAG list information refers to information including a list of CAGs to which the UE 101 may access. The Service Accept message may be secured by using NAS security context and then may be transmitted. In an embodiment of the disclosure, the Service Accept message may be configured as shown in [Table 3].

**[Table 3] Service Accept message**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | Security header type | Security header type | M | v | 1/2 |
| | Spare half octet | Spare half octet | M | V | 1/2 |
| | Service accept message identity | Message type | M | V | 1 |
| 50 | PDU session status | PDU session status | O | TLV | 4-34 |
| 26 | PDU session reactivation result | PDU session reactivation result | O | TLV | 4-34 |
| 72 | PDU session reactivation result error cause | PDU session reactivation result error cause | O | TLV-E | 5-515 |
| 78 | EAP message | EAP message | O | TLV-E | 7-1503 |
| XX | T3448 value | GPRS timer 3 | O | TLV | 3 |
| | CAG info | CAG info | O | TLV | |

In an embodiment of the disclosure, CAG information (CAG info) may be represented as an IE configured as shown in [Table 3]. To be more specific, CAG info may refer to the information including a list of CAGs to which the UE 101 may access, and may include the list of CAGs and information about the list. Accordingly, a CAG info value may include a plurality of pieces of information related to CAG lists, and a length of CAG info contents may include length information about CAG info contents information.

**[Table 4]**

| 8 | 7 | 6 | 5 | 4 | 3 | 2 | 1 | |
|---|---|---|---|---|---|---|---|---|
| CAG info IEI | | | | | | | | octet 1 |
| Length of CAG info contents | | | | | | | | octet 2 |
| CAG info value | | | | | | | | octet 3 |
| | | | | | | | | octet 4 |

In operation 321, the AMF 111 may transmit the Service Accept message to the UE 101. In an embodiment of the disclosure, the Service Accept message may be a secured message. In an embodiment of the disclosure, integrity protection may be performed on the Service Accept message. Alternatively, integrity protection and ciphering may be performed on the Service Accept message. Alternatively, a security procedure may not be applied to the Service Accept message.

In operation 323, the UE 101 may perform a security check on the Service Accept message received from the AMF 111. As described above, the Service Accept message may be the secured message. In an embodiment of the disclosure, in the security check, the UE 101 may perform verification on integrity protection of the Service Accept message, and when the verification with respect to the integrity protection is successful, the UE 101 may perform subsequent operations by using a CAG list included in the Service Accept message. Alternatively, in the security check, the UE 101 may perform deciphering and verification on integrity protection of the Service Accept message, and when the verification and the deciphering are successful, the UE 101 may perform subsequent operations by using the CAG list included in the Service Accept message. Alternatively, when the Service Accept message is not the secured message, the UE 101 may not perform the security procedure and may perform subsequent operations by using the CAG list included in the Service Accept message.

In operation 325, the UE 101 stores the CAG list obtained in operation 323. In an embodiment of the disclosure, the UE 101 may modify or update a pre-stored CAG list.

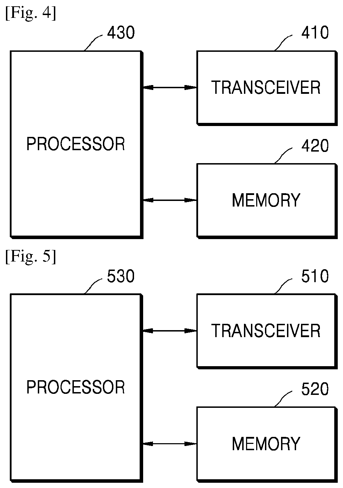

FIG. 4 illustrates a diagram illustrating a configuration of a UE, according to an embodiment of the disclosure.

As illustrated in FIG. 4, the UE of the disclosure may include a transceiver 410, a memory 420, and a processor 430. The processor 430, the transceiver 410, and the memory 420 of the UE may operate according to the aforementioned communication method of the UE. However, elements of the UE are not limited to the described elements. For example, the UE may include more elements than the aforementioned elements or may include fewer elements than the aforementioned elements. In addition, the processor 430, the transceiver 410, and the memory 420 may be implemented in the form of a chip.

A receiver of the UE and a transmitter of the UE may be collectively referred to as the transceiver 410, and the transceiver 410 may transmit or receive a signal to or from a BS. The signal transmitted to or received from the BS may include control information and data. To this end, the transceiver 410 may include a radio frequency (RF) transmitter for up-converting a frequency of and amplifying signals to be transmitted, and an RF receiver for low-noise-amplifying and down-converting a frequency of received signals. However, this is merely an example of the transceiver 410, and thus elements of the transceiver 410 are not limited to the RF transmitter and the RF receiver.

Also, the transceiver 410 may receive signals through radio channels and output the signals to the processor 430, and may transmit signals output from the processor 430, through radio channels.

The memory 420 may store programs and data that are required for operations of the UE. The memory 420 may also store control information or data included in a signal obtained by the UE. The memory 420 may be implemented as a storage medium including a read only memory (ROM), a random access memory (RAM), a hard disk, a compact disc (CD)-ROM, a digital versatile disc (DVD), or the like, or any combination thereof.

The processor 430 may control a series of procedures to operate the UE according to the aforementioned embodiments of the disclosure. The processor 430 may include one or more processors. For example, the processor 430 may include a communication processor (CP) for controlling communications and an application processor (AP) for controlling a higher layer such as an application program.

FIG. 5 illustrates a diagram illustrating a configuration of a network entity, according to an embodiment of the disclosure.

As illustrated in FIG. 5, the network entity of the disclosure may include a transceiver 510, a memory 520, and a processor 530. The processor 530, the transceiver 510, and the memory 520 of the network entity may operate according to the aforementioned communication method of the network entity. However, elements of the network entity are not limited thereto. For example, the network entity may include more elements than the aforementioned elements or may include fewer elements than the aforementioned elements. In addition, the processor 530, the transceiver 510, and the memory 520 may be implemented in the form of a chip. The network entity may include NFs such as an AMF, a SMF, a Policy Control Function (PCF), a Network Exposure Function (NEF), a UDM, a UPF, or the like. The network entity may include a BS.

A receiver of the network entity and a transmitter of the network entity may be collectively referred to as the transceiver 510, and the transceiver 510 may transmit or receive a signal to or from a UE or another network entity. The transmitted or received signal may include control information and data. To this end, the transceiver 510 may include a RF transmitter for up-converting a frequency of and amplifying signals to be transmitted, and an RF receiver for low-noise-amplifying and down-converting a frequency of received signals. However, this is merely an example of the transceiver 510, and thus elements of the transceiver 510 are not limited to the RF transmitter and the RF receiver. The transceiver 510 may include a wired or wireless transceiver, and may include various configurations for transmitting and receiving signals.

Also, the transceiver 510 may receive a signal via a communication channel (e.g., a radio channel) and then output the signal to the processor 530, and may transmit a signal, which is output from the processor 530, via the communication channel.

The memory 520 may store programs and data that are required for operations of the network entity. The memory 520 may also store control information or data included in a signal obtained by the network entity. The memory 520 may be implemented as a storage medium including a ROM, a RAM, a hard disk, a CD-ROM, a DVD, or the like, or any combination thereof.

The processor 530 may control a series of procedures to operate the network entity according to the aforementioned embodiments of the disclosure. The processor 530 may include one or more processors. The methods according to the embodiments of the disclosure as described herein or in the following claims may be implemented as hardware, software, or a combination of hardware and software.

When implemented as software, a computer-readable storage medium that stores one or more programs (e.g., software modules) may be provided. The one or more programs, which are stored in the computer-readable storage medium or the computer program product, are configured for execution by one or more processors in an electronic device. The one or more programs include instructions directing the electronic device to execute the methods according to the embodiments of the disclosure as described herein or in the following claims.

The programs (e.g., software modules or software) may be stored in non-volatile memory including RAM or flash memory, ROM, electrically erasable programmable read only memory (EEPROM), a magnetic disc storage device, a CD-ROM, a DVD, another optical storage device, or a magnetic cassette. Alternatively, the programs may be stored in memory including a combination of some or all of the aforementioned storage media. A plurality of such memories may be included.

In addition, the programs may be stored in an attachable storage device accessible through any or a combination of communication networks such as Internet, an intranet, a local area network (LAN), a wide area network (WAN), a storage area network (SAN), or the like. Such a storage device may access, via an external port, a device performing the embodiments of the disclosure. Furthermore, a separate storage device on the communication network may access the electronic device performing the embodiments of the disclosure.

According to an embodiment of the disclosure, various services may be efficiently supported in a wireless communication system.

In the aforementioned particular embodiments of the disclosure, the elements included in the disclosure are expressed in the singular or plural according to the presented particular embodiments of the disclosure. However, the singular or plural expressions are selected suitably according to the presented situations for convenience of descriptions, the disclosure is not limited to the singular or plural elements, and the elements expressed in the plural may even be configured in the singular or the elements expressed in the singular may even be configured in the plural.

## Claims

1. An access method of a user equipment, UE, (101) in a wireless communication system, the access method comprising:
transmitting (201), to an Access and Mobility Management Function, AMF, (111), a Registration Request message;
receiving (221), from the AMF (111), a Registration Accept message including Closed Access Group, CAG, information list with information on a length of the CAG information list in response to the Registration Request message;
storing or updating (225) the CAG information list; and
accessing a network based on the CAG information list,
wherein the CAG information list includes a plurality of CAGs that can be accessed.

2. The access method of claim 1, wherein the Registration Accept message including the CAG information list is a secured message, and further comprising performing at least one of verification or deciphering (223) for the Registration Accept message.

3. The access method of claim 1, wherein the Registration Accept message is secured using on Non-Access-Stratum, NAS, security context.

4. A method of an Access and Mobility Management Function, AMF, (111) in a wireless communication system, the method comprising:
receiving (301), from a user equipment, UE, a Registration Request message;
transmitting (311), to a user Data Management (UDM) (151), a request message for subscription information related to the UE (101);
receiving (313), from the UDM (151), a response message including the subscription information related to the UE (101);
generating a Closed Access Group. CAG. information list with information on a length of the CAG information list based on the subscription information; and
transmitting (321), to the UE (101), a Registration Accept message including the CAG information list in response to the Registration Request message,
wherein the CAG information list includes a plurality of CAGs that can be accessed.

5. The method of claim 4, wherein the Registration Accept message including the CAG information list is a secured message, and further comprising performing at least one of integrity protection or ciphering (323) for the Registration Accept message.

6. The method of claim 4, wherein the Registration Accept message is secured using on Non-Access-Stratum. NAS, security context.

7. A user equipment, UE, (101) in a wireless communication system, the UE (101) comprising:
a transceiver (410);
a memory (420); and
a processor (430) configured to:
transmit (201), to an Access and Mobility Management Function, AMF, (111), a Registration Request message;
receive (221), from the AMF (111), a Registration Accept message including Closed Access Group, CAG, information list with information on a length of the CAG information list in response to the Registration Request message;
store or update (225) the CAG information list; and
access a network based on the CAG information list,
wherein the CAG information list includes a plurality of CAGs that can be accessed.

8. The UE (101) of claim 7, wherein the Registration Accept message including the CAG information list is a secured message, and
wherein the processor is further configured to perform at least one of verification or deciphering (223) for the Registration Accept message.

9. The UE (101) of claim 7, wherein the Registration Accept message is secured using on Non-Access-Stratum, NAS, security context.

10. An Access and Mobility Management Function, AMF, (111) in a wireless communication system, the AMF (111) comprising:
a transceiver (510);
a memory (520); and
a processor (530) configured to:
receive (301), from a user equipment, UE, a Registration Request message;
transmit (311), to a user Data Management (UDM) (151), a request message for subscription information related to the UE (101);
receive (313), from the UDM (151), a response message including the subscription information related to the UE (101);
generate a Closed Access Group, CAG, information list with information on a length of the CAG information list based on the subscription information; and
transmit (321), to the UE (101), a Registration Accept message including the CAG information in response to the Registration Request message,
wherein the CAG information list includes a plurality of CAGs that can be accessed.

11. The AMF (111) of claim 10, wherein the Registration Accept message including the CAG information list is a secured message, and
wherein the processor is further configured to perform at least one of integrity protection or ciphering (323) for the Registration Accept message.

12. The AMF (111) of claim 10, wherein the Registration Accept message is secured using on Non-Access-Stratum, NAS, security context.

## Patentansprüche

1. Zugriffsverfahren eines Benutzergeräts, UE, (101), in einem drahtlosen Kommunikationssystem, wobei das Zugriffsverfahren Folgendes umfasst:
Übertragen (201) einer Registrierungsanforderungsnachricht an eine Zugriffs- und Mobilitätsverwaltungsfunktion, AMF, (111);
Empfangen (221) einer Registrierungsannahmenachricht von der AMF (111), die eine Informationsliste der geschlossenen Zugriffsgruppe, CAG, mit Informationen über eine Länge der CAG-Informationsliste als Reaktion auf die Registrierungsanforderungsnachricht umfasst;
Speichern oder Aktualisieren (225) der CAG-Informationsliste; und
Zugreifen auf ein Netzwerk basierend auf der CAG-Informationsliste,
wobei die CAG-Informationsliste eine Vielzahl von CAGs umfasst, auf die zugegriffen werden kann.

2. Zugriffsverfahren nach Anspruch 1, wobei die Registrierungsannahmenachricht, die die CAG-Informationsliste umfasst, eine gesicherte Nachricht ist, und ferner die Durchführung von mindestens einer der Verifizierung oder der Entschlüsselung (223) für die Registrierungsannahmenachricht umfasst.

3. Zugriffsverfahren nach Anspruch 1, wobei die Registrierungsannahmenachricht unter Verwendung eines Nicht-Zugriffsschicht-, NAS-,Sicherheitskontextes gesichert wird.

4. Verfahren einer Zugriffs- und Mobilitätsverwaltungsfunktion, AMF, (111), in einem drahtlosen Kommunikationssystem, wobei das Verfahren umfasst:
Empfangen (301) einer Registrierungsanforderungsnachricht von einem Benutzergerät, UE;
Übertragen (311) einer Anforderungsnachricht für Abonnementinformationen bezüglich des UE (101) an eine Benutzerdatenverwaltung (UDM) (151);
Empfangen (313) einer Antwortnachricht von der UDM (151), die die Abonnementinformationen in Bezug auf das UE (101) umfasst;
Erzeugen einer Informationsliste der geschlossenen Zugriffsgruppe, CAG, mit Informationen über eine Länge der CAG-Informationsliste basierend auf den Abonnementinformationen; und
Übertragen (321) einer Registrierungsannahmenachricht, die die CAG-Informationsliste umfasst, an das UE (101) als Reaktion auf die Registrierungsanforderungsnachricht,
wobei die CAG-Informationsliste eine Vielzahl von CAGs umfasst, auf die zugegriffen werden kann.

5. Verfahren nach Anspruch 4, wobei die Registrierungsannahmenachricht, die die CAG-Informationsliste umfasst, eine gesicherte Nachricht ist, und ferner die Durchführung von mindestens einem eines Integritätsschutzes oder einer Verschlüsselung (323) für die Registrierungsannahmenachricht umfasst.

6. Verfahren nach Anspruch 4, wobei die Registrierungsannahmenachricht unter Verwendung eines Nicht-Zugriffsschicht-, NAS-,Sicherheitskontextes gesichert wird.

7. Benutzergerät, UE, (101) in einem drahtlosen Kommunikationssystem, wobei das UE (101) Folgendes umfasst:
einen Transceiver (410);
einen Speicher (420); und
einen Prozessor (430), der konfiguriert ist zum:
Übertragen (201) einer Registrierungsanforderungsnachricht an eine Zugriffs- und Mobilitätsverwaltungsfunktion, AMF, (111);
Empfangen (221) einer Registrierungsannahmenachricht von der AMF (111), die eine Informationsliste der geschlossenen Zugriffsgruppe, CAG, mit Informationen über eine Länge der CAG-Informationsliste als Reaktion auf die Registrierungsanforderungsnachricht umfasst;
Speichern oder Aktualisieren (225) der CAG-Informationsliste; und
Zugreifen auf ein Netzwerk basierend auf der CAG-Informationsliste,
wobei die CAG-Informationsliste eine Vielzahl von CAGs umfasst, auf die zugegriffen werden kann.

8. UE (101) nach Anspruch 7, wobei die Registrierungsannahmenachricht, die die CAG-Informationsliste umfasst, eine gesicherte Nachricht ist, und
wobei der Prozessor ferner konfiguriert ist, um mindestens eine von einer Verifizierung oder einer Entschlüsselung (223) für die Registrierungsannahmenachricht durchzuführen.

9. UE (101) nach Anspruch 7, wobei die Registrierungsannahmenachricht unter Verwendung eines Nicht-Zugriffsschicht-, NAS-,Sicherheitskontextes gesichert wird.

10. Zugriffs- und Mobilitätsverwaltungsfunktion, AMF, (111) in einem drahtlosen Kommunikationssystem, wobei die AMF (111) umfasst:
einen Transceiver (510);
einen Speicher (520); und
einen Prozessor (530), der konfiguriert ist zum:
Empfangen (301) einer Registrierungsanforderungsnachricht von einem Benutzergerät, UE;
Übertragen (311) einer Anforderungsnachricht für Abonnementinformationen bezüglich des UE (101) an eine Benutzerdatenverwaltung (UDM) (151);
Empfangen (313) einer Antwortnachricht von der UDM (151), die die Abonnementinformationen in Bezug auf das UE (101) umfasst;
Erzeugen einer Informationsliste der geschlossenen Zugriffsgruppe, CAG, mit Informationen über eine Länge der CAG-Informationsliste basierend auf den Abonnementinformationen; und
Übertragen (321) einer Registrierungsannahmenachricht, die die CAG-Information umfasst, an das UE (101) als Reaktion auf die Registrierungsanforderungsnachricht,
wobei die CAG-Informationsliste eine Vielzahl von CAGs umfasst, auf die zugegriffen werden kann.

11. AMF (111) nach Anspruch 10, wobei die Registrierungsannahmenachricht, die die CAG-Informationsliste umfasst, eine gesicherte Nachricht ist, und
wobei der Prozessor ferner konfiguriert ist, um mindestens einen von einem Integritätsschutz oder einer Verschlüsselung (323) für die Registrierungsannahmenachricht durchzuführen.

12. UE (101) nach Anspruch 10, wobei die Registrierungsannahmenachricht unter Verwendung eines Nicht-Zugriffsschicht-, NAS-,Sicherheitskontextes gesichert wird.

## Revendications

1. Procédé d'accès d'un équipement d'utilisateur, UE, (101) dans un système de communication sans fil, le procédé d'accès comprenant :
transmettre (201) à une fonction de gestion d'accès et de mobilité, AMF, (111) un message de demande d'enregistrement ;
recevoir (221), en provenance de l'AMF (111), un message d'acceptation d'enregistrement comprenant une liste d'informations de groupe d'accès fermé, CAG, avec des informations sur une longueur de la liste d'informations CAG en réponse au message de demande d'enregistrement ;
stocker ou mettre à jour (225) la liste d'informations CAG ; et
accéder à un réseau en se basant sur la liste d'informations CAG,
dans lequel la liste d'informations CAG comprend une pluralité de CAG auxquels il est possible d'accéder.

2. Procédé d'accès de la revendication 1, dans lequel le message d'acceptation d'enregistrement comprenant la liste d'informations CAG est un message sécurisé, et comprenant en outre l'exécution d'au moins l'un d'une vérification ou d'un déchiffrage (223) pour le message d'acceptation d'enregistrement.

3. Procédé d'accès de la revendication 1, dans lequel le message d'acceptation d'enregistrement est sécurisé à l'aide d'un contexte de sécurité de strate de non-accès, NAS.

4. Procédé d'une fonction de gestion d'accès et de mobilité, AMF, (111) dans un système de communication sans fil, le procédé comprenant:
recevoir (301), d'un équipement utilisateur, UE, un message de demande d'enregistrement ;
transmettre (311), à un gestionnaire de données utilisateur (UDM) (151), un message de demande d'informations d'abonnement relatives à l'UE (101) ;
recevoir (313), de l'UDM (151), un message de réponse comprenant les informations d'abonnement relatives à l'UE (101) ;
générer une liste d'informations de groupe d'accès fermé, CAG, avec des informations sur une longueur de la liste d'informations CAG basées sur les informations d'abonnement ; et
transmettre (321), à l'UE (101), un message d'acceptation d'enregistrement comprenant la liste d'informations CAG en réponse au message de demande d'enregistrement,
dans lequel la liste d'informations CAG comprend une pluralité de CAG auxquels il est possible d'accéder.

5. Procédé de la revendication 4, dans lequel le message d'acceptation d'enregistrement comprenant la liste d'informations CAG est un message sécurisé, et comprenant en outre l'exécution d'au moins l'un d'une protection d'intégrité ou d'un chiffrement (323) pour le message d'acceptation d'enregistrement.

6. Procédé de la revendication 4, dans lequel le message d'acceptation d'enregistrement est sécurisé à l'aide d'un contexte de sécurité de strate de non-accès, NAS.

7. Équipement utilisateur, UE, (101) dans un système de communication sans fil, l'UE (101) comprenant :
un émetteur-récepteur (410) ;
une mémoire (420) ; et
un processeur (430) configuré pour :
transmettre (201) à une fonction de gestion d'accès et de mobilité, AMF, (111) un message de demande d'enregistrement ;
recevoir (221), en provenance de l'AMF (111), un message d'acceptation d'enregistrement comprenant une liste d'informations de groupe d'accès fermé, CAG, avec des informations sur une longueur de la liste d'informations CAG en réponse au message de demande d'enregistrement ;
stocker ou mettre à jour (225) la liste d'informations CAG ; et
accéder à un réseau en se basant sur la liste d'informations CAG,
dans lequel la liste d'informations CAG comprend une pluralité de CAG auxquels il est possible d'accéder.

8. UE (101) de la revendication 7, dans lequel le message d'acceptation d'enregistrement comprenant la liste d'informations CAG est un message sécurisé, et
dans lequel le processeur est en outre configuré pour effectuer au moins l'un d'une vérification ou d'un déchiffrage (223) pour le message d'acceptation d'enregistrement.

9. UE (101) de la revendication 7, dans lequel le message d'acceptation d'enregistrement est sécurisé à l'aide d'un contexte de sécurité de strate de non-accès, NAS.

10. Fonction de gestion d'accès et de mobilité, AMF, (111) dans un système de communication sans fil, l'AMF (111) comprenant :
un émetteur-récepteur (510) ;
une mémoire (520) ; et
un processeur (530) configuré pour :
recevoir (301), d'un équipement utilisateur, UE, un message de demande d'enregistrement ;
transmettre (311), à un gestionnaire de données utilisateur (UDM) (151), un message de demande d'informations d'abonnement relatives à l'UE (101) ;
recevoir (313), de l'UDM (151), un message de réponse comprenant les informations d'abonnement relatives à l'UE (101) ;
générer une liste d'informations de groupe d'accès fermé, CAG, avec des informations sur une longueur de la liste d'informations CAG basées sur les informations d'abonnement ; et
transmettre (321), à l'UE (101), un message d'acceptation d'enregistrement comprenant les informations CAG en réponse au message de demande d'enregistrement,
dans laquelle la liste d'informations CAG comprend une pluralité de CAG auxquels il est possible d'accéder.

11. AMF (111) de la revendication 10, dans laquelle le message d'acceptation d'enregistrement comprenant la liste d'informations CAG est un message sécurisé, et
dans laquelle le processeur est en outre configuré pour effectuer au moins l'un d'une protection d'intégrité ou d'un chiffrement (323) pour le message d'acceptation d'enregistrement.

12. UE (101) de la revendication 10, dans lequel le message d'acceptation d'enregistrement est sécurisé à l'aide d'un contexte de sécurité de strate de non-accès, NAS.
